# EUROPÄISCHE PATENTSCHRIFT

(11) **EP 3 670 396 B1**
(45) Veröffentlichungstag und Bekanntmachung des Hinweises auf die Patenterteilung: **06.12.2023**
(21) Anmeldenummer: 19215465.6
(22) Anmeldetag: 12.12.2019
(51) Int. Cl.: B65G 21/12, B65G 41/00

(54) **STETIGFÖRDERER ZUM FÖRDERN VON OBJEKTEN UND OBJEKTFÖRDERHALLE MIT STETIGFÖRDERER**
CONTINUOUS CONVEYOR FOR CONVEYING OBJECTS AND OBJECT CONVEYOR HALL WITH A CONTINUOUS CONVEYOR
TRANSPORTEUR CONTINU DESTINÉ AU TRANSPORT DES OBJETS ET HALLE DE TRANSPORT DES OBJETS POURVUE DE TRANSPORTEUR CONTINU

(30) Priorität: 20.12.2018 DE 102018133052
(43) Veröffentlichungstag der Anmeldung: 24.06.2020
(73) Patentinhaber: Deutsche Post AG, 53113 Bonn (DE); TRANSNORM SYSTEM GmbH, 31177 Harsum (DE)
(72) Erfinder: Hartmann, Bernd, 53501 Grafschaft-Leimersdorf (DE); Ventz, Kai-Ulrich, 31139 Hildesheim (DE); Schällig, René, 31134 Hildesheim (DE); Mönster, Jana, 30169 Hannover (DE)
(74) Vertreter: Cohausz & Florack

(56) Entgegenhaltungen:
- CN-A- 107 416 424
- CN-A- 107 458 819
- CN-A- 107 857 047
- GB-A- 1 208 965
- JP-A- H06 171 740
- JP-A- H06 316 338
- JP-U- S57 151 704
- US-A- 4 205 934
- US-A- 5 568 857
- US-A1- 2015 151 930
- US-A1- 2016 264 356

## Beschreibung

Die Erfindung betrifft einen Stetigförderer nach Anspruch 1.

Ferner betrifft die Erfindung eine Objektförderhalle mit wenigstens einem solchen Stetigförderer.

Es sind sehr unterschiedliche Stetigförderer bekannt, die auch zu sehr unterschiedlichen Zwecken eingesetzt werden. In vielen Fällen dienen die Stetigförderer dem Fördern von Objekten, bei denen es sich um umverpackte Güter und/oder Stückgüter handeln kann. Hinsichtlich der Größe, der Form und der Art bestehen grundsätzlich keine Einschränkungen bei solchen Objekten, hier sollen aber insbesondere solche gemeint sein, die von einer Person getragen und gehandhabt werden können. Insbesondere kann es sich bei den Objekten um Stückgüter, wie Packstücke, insbesondere um sogenannte Paketsendungen bzw. Pakete handeln, die separat verwendet und in Verteilzentren sortiert und verteilt werden. Packstücke können dabei bedarfsweise als umverpackte Stückgüter angesehen werden. Steigförderer der genannten Art sind aus der US 4 205 934 A und der US 2016/264356 A1 bekannt. Die US 4 205 934 A offenbart einen Stetigförderer nach dem Oberbegriff des Anspruchs 1.

Objekte können generell aus unterschiedlichen Gründen gefördert werden. Beispielsweise können die Objekte zum Zwecke eines Sortierens, eines Verpackens, einer Beschriftung, einer Individualisierung oder eines Umladens gefördert werden. Hierzu sind entsprechende Förderanlagen, meist in Fabrikhallen bzw. Objektförderhallen installiert. Im Falle von Paketsendungen kommen hier auch sogenannte Verteilzentren in Frage, in denen die Paketsendungen umgeschlagen, sortiert und/oder verteilt werden. Die Fördertechnik hat dabei ganz grundsätzlich je nach der zu bewältigenden Aufgabe einen nicht unerheblichen Platzbedarf. Da der zur Verfügung stehende Platz meist begrenzt ist und die Bereitstellung von Platz grundsätzlich auch ein nicht unerheblicher Kostenfaktor ist, nehmen die Anforderungen an die Kompaktheit der Förderanlagen immer mehr zu.

Um die Fördertechnik immer weiter zu verdichten, wird zunehmend an Platz für Wege gespart, auf denen Personen durch die Förderanlagen laufen können. Dies ist prinzipiell auch zu tolerieren, da immer weniger Personal zum Betrieb der Förderanlagen benötigt wird. Andererseits müssen bestimmte Anlagenteile dennoch für Wartungs- und Reparaturzwecke erreichbar sein. Außerdem muss sichergestellt werden, dass in ausreichendem Maße Rettungs- und Fluchtwege zur Verfügung stehen, um ein rasches Verlassen eines bestimmten Anlagenbereichs ebenso zu gewähren wie eine gute Erreichbarkeit bestimmter Anlagenteile, an denen es zu Unfällen mit Personenschäden kommen kann. Vor diesem Hintergrund sind der weiteren Verdichtung der Fördertechnik zunehmend Grenzen gesetzt oder es muss ein immer höherer Aufwand für eine weitere Verdichtung der Fördertechnik betrieben werden.

Daher liegt der vorliegenden Erfindung die Aufgabe zugrunde, die Stetigförderer und die Objektförderhallen der eingangs genannten und zuvor näher beschriebenen Art derart auszugestalten und weiterzubilden, dass eine weitere Verdichtung und Verringerung des Platzbedarfs erreicht werden kann, ohne übermäßige Nachteile hinsichtlich der Wartung und der Sicherheit in Kauf nehmen zu müssen.

Diese Aufgabe ist durch einen Stetigförderer nach Anspruch 1 gelöst.

Die genannte Aufgabe ist ferner gemäß Anspruch 14 44 gelöst durch eine Objektförderhalle mit wenigstens einem Stetigförderer nach einem der Ansprüche 1 bis 13.

Unter Stetigförderern wird eine innerbetriebliche Förderanlage verstanden, die einen kontinuierlichen Strom von geförderten Objekten entlang vorgegebener Strecken oder Förderbahnen erzeugen können, und zwar grundsätzlich unabhängig von der Menge der zu fördernden Objekte. Steigförderer bzw. die zu fördernden Objekte sind wenigstens prinzipiell stetig bzw. ständig in Bewegung und daher keinen Transportzyklen unterworfen. Stetigförderer sind zumeist flurgebunden und in der Lage, das zu transportierende Gut waagerecht, geneigt und senkrecht zu transportieren. Oft benötigen sie viel Platz am Boden und haben einen festgelegten Transportweg. Stetigförderer sind bevorzugt als mechanische Förderer ausgebildet und zwar in Form eines angetriebenen Rollenförderers, Bandförderers und/oder Kettenförderers. Schwerkraftförderer können dagegen als Wendelrutsche oder Rollenbahn ausgebildet sein. Strömungsförderer und Personenförderer sind vorliegend jedoch eher nicht oder nur sehr bedingt als Stetigförderer zu verstehen.

Die vorliegenden Stetigförderer weisen unterschiedliche Fördersegmente zum Fördern der Objekte auf. Wenigstens sind ein vorderes Fördersegment, ein mittleres Fördersegment und ein hinteres Fördersegment vorgesehen und zwar in wenigstens einer Förderrichtung hintereinander, so dass die Objekte vom vorderen Fördersegment an das mittlere Fördersegment und von dort an das hintere Fördersegment übergeben werden. Dabei befindet sich die Fördereinrichtung des mittleren Fördersegments in einer unteren Gebrauchsstellung. Es handelt sich dabei um eine Gebrauchsstellung, weil die Fördereinrichtung in dieser Stellung ihrem hauptsächlichen, bestimmungsgemäßen Gebrauch dient, nämlich dem Fördern von Objekten. Das mittlere Fördersegment weist neben der Fördereinrichtung auch eine Höhenverstelleinrichtung auf, die der Höhenverstellung der Fördereinrichtung dient. Die Fördereinrichtung kann über die Höhenverstelleinrichtung wenigstens von einer unteren Gebrauchsstellung in wenigstens eine obere Stellung verstellt werden. Dabei kann es sich bei der wenigstens einen oberen Stellung ebenfalls um eine Gebrauchsstellung zum Fördern von Objekten handeln. Erforderlich ist dies jedoch nicht. Dabei ist die Höhenverstellung so ausgebildet, dass eine Höhenverstellung der Fördereinrichtung des mittleren Fördersegments gegenüber dem vorderen Fördersegment und dem hinteren Fördersegment möglich ist.

Dabei hat die Erfindung erkannt, dass sich Wege in der Fördertechnik oder Förderanlage bedarfsweise eröffnen lassen, wenn diese gebraucht werden. Wenn diese Wege nicht gebraucht werden, kann der entsprechende Platz jedoch für das Fördern von Objekten genutzt werden. Wenn es sich bei der wenigstens einen oberen Stellung der Fördereinrichtung des mittleren Fördersegments um eine Gebrauchsstellung handelt, können sogar dann, wenn der entsprechende Weg benötigt wird, weitere Objekte gefördert werden, wenn auch entlang einer anderen Förderbahn. Zudem können bedarfsweise auch andere Objekte gefördert werden. Die untere Gebrauchsstellung der Fördereinrichtung kann jedoch nicht genutzt werden, wenn der entsprechende Weg freigegeben werden soll.

Um durch eine Höhenverstellung einen Weg für eine Person in der Förderanlage bereitzustellen ist diese so vorgesehen, dass unterhalb der Fördereinrichtung des mittleren Fördersegments in der oberen Stellung ein Freiraum mit einer Höhe von wenigstens 160 cm, vorzugsweise wenigstens 175 cm, insbesondere wenigstens 190 cm, einer Breite von wenigstens 70 cm, vorzugsweise wenigstes 90 cm, insbesondere wenigstens 110 cm und einer Tiefe entsprechend der Breite der Fördereinrichtung des mittleren Fördersegments vorgesehen ist. Wenn die Fördereinrichtung keine konstante Breite aufweist, sollte die Tiefe des Freiraums vorzugsweise der Breite der Fördereinrichtung im Bereich des Freiraums entsprechen. So ist es einer Person möglich, sich unter die Fördereinrichtung des mittleren Fördersegments zu begeben, ohne dabei kriechen zu müssen. Bedarfsweise muss die entsprechende Person sich leicht bücken oder den Kopf einziehen. Ansonsten kann die Person aber unter der Fördereinrichtung stehen oder gehen. Dabei ist es besonders bevorzugt, wenn der Freiraum unterhalb der Fördereinrichtung des mittleren Fördersegments einen Durchgang bildet, um unter der Fördereinrichtung des mittleren Fördersegments hindurchzugehen. Der Durchgang wird dabei vorzugsweise in einer Richtung geöffnet, die wenigstens im Wesentlichen quer zur Förderrichtung bzw. zur Förderbahn der Fördereinrichtung ausgerichtet ist. Dadurch wird die Möglichkeit geschaffen, in bestimmten Situationen bei angehobener Fördereinrichtung unter der Fördereinrichtung des mittleren Fördersegments hindurchzugehen. Der Durchgang kann dabei weiter bevorzugt als Teil eines Fluchtwegs und/oder Rettungswegs ausgebildet sein.

In der erfindungsgemäßen Objektförderhalle ist ein Stetigförderer oder eine Reihe von Stetigförderern nach einem der Ansprüche 1 bis 13 vorgesehen. Hierbei bildet der Freiraum einen Durchgang, insbesondere quer zur Förderbahn und/oder Förderrichtung. Wenn die Fördereinrichtung keine konstante Breite aufweist, sollte die Tiefe des Freiraums vorzugsweise der Breite der Fördereinrichtung im Bereich des Freiraums entsprechen.

Insbesondere kann es sich bei den Objekten ganz allgemein um Stückgüter wie Packstücke, insbesondere um sogenannte Paketsendungen bzw. Pakete handeln, die separat verwendet und in Verteilzentren sortiert und verteilt werden. Packstücke können dabei beispielsweise als umverpackte Stückgüter angesehen werden.

Bei einer ersten besonders bevorzugten Ausgestaltung des Stetigförderers bilden wenigstens eine Förderfläche des vorderen Fördersegments, wenigstens eine Förderfläche der Fördereinrichtung des mittleren Fördersegments in der unteren Gebrauchsstellung und wenigstens eine Förderfläche des hinteren Fördersegments eine wenigstens im Wesentlichen stetige Förderbahn zum Fördern von Objekten vom vorderen Fördersegment über das mittlere Fördersegment zum hinteren Fördersegment. Durch diese bedarfsweise wenigstens im Wesentlichen fluchtende Anordnung der Förderflächen zueinander wird ein kontinuierlicher Förderstrom an Objekten entlang der Fördersegmente ermöglicht. Dabei kann es eine einzige Anordnung geben, in der die Förderflächen der Fördersegmente in der Fördereinrichtung entlang einer stetigen Förderbahn bzw. wenigstens im Wesentlichen zueinander fluchtend angeordnet sind. Es kann aber auch mehrere Anordnungen geben, in denen dies der Fall ist. Beispielsweise können das vordere Fördersegment und das hintere Fördersegment mehrere Förderflächen übereinander aufweisen. Dann kann die Fördereinrichtung des mittleren Fördersegments bedarfsweise durch die Höhenverstellung zwischen den unterschiedlichen Förderflächen des vorderen Fördersegments und des hinteren Fördersegments verstellt werden, so dass die Förderfläche der Fördereinrichtung wenigstens im Wesentlichen mit unterschiedlichen Förderflächen der angrenzenden Fördersegmente fluchtend angeordnet werden kann. Dann gibt es also wenigstens eine untere Gebrauchsstellung und wenigstens eine obere Gebrauchsstellung der Fördereinrichtung des mittleren Fördersegments. Es ist aber auch denkbar, dass neben dem mittleren Fördersegment auch das vordere Fördersegment und/oder das hintere Fördersegment eine höhenverstellbare Fördereinrichtung aufweist. Dann können dieselben Förderflächen der Fördereinrichtungen auf unterschiedlichen Höhen bzw. in unterschiedlichen Gebrauchsstellungen wenigstens im Wesentlichen fluchtend zueinander abgeordnet werden, und zwar jeweils im Sinne einer gemeinsamen Förderbahn.

Insbesondere für den Fall, dass durch das Verstellen der Fördereinrichtung des mittleren Fördersegments außerhalb des normalen Betriebs des Stetigförderers in die wenigstens eine obere Stellung verstellt wird, kann die wenigstens eine obere Stellung der Fördereinrichtung des mittleren Fördersegments eine nicht dem Fördern von Objekten dienende Nichtgebrauchsstellung sein. Dies kommt insbesondere dann in Betracht, wenn das Fördern der Objekte im Falle einer Reparatur oder Wartung ohnehin unterbrochen wird. Eine entsprechende Unterbrechung kann auch in den Fällen zweckmäßig sein, in denen durch die Höhenverstellung der Fördereinrichtung des mittleren Fördersegments ein Fluchtweg und/oder Rettungsweg geschaffen werden soll. Unter den vorstehenden Bedingungen kann die Fördereinrichtung ohne Weiteres in eine obere Stellung verstellt werden, die ausreichend Platz freigibt, auch wenn in der oberen Stellung keine weitere Förderung der Objekte entlang des Stetigförderers unter Zuhilfenahme der Fördereinrichtung des mittleren Fördersegments möglich ist. Dann kann in Kauf genommen werden, dass die wenigstens eine Förderfläche der Fördereinrichtung des mittleren Fördersegments in der oberen Stellung zusammen mit den Förderflächen des vorderen Fördersegments und des hinteren Fördersegments keine wenigstens im Wesentlichen stetige Förderbahn zum Fördern von Objekten vom vorderen Fördersegment über das mittlere Fördersegment zum hinteren Fördersegment bilden. Es wird aber dadurch ausreichend Platz geschaffen, etwa um den Stetigförderer zu warten oder zu reparieren oder um einen Fluchtweg oder Rettungsweg zu öffnen.

Damit die Höhenverstellung zuverlässig funktioniert, wenn sie benötigt wird, ist die Höhenverstelleinrichtung zum Höhenverstellen der Fördereinrichtung des mittleren Fördersegments als rein mechanische Höhenverstelleinrichtung zum rein mechanischen, händischen Höhenverstellen der Fördereinrichtung des mittleren Fördersegments ausgebildet. Dies gilt umso mehr, wenn die Höhenverstellung der Fördereinrichtung des mittleren Fördersegments in einer Notsituation erfolgen soll, um einen Rettungsweg und/oder einen Fluchtweg freizugeben. In einer solchen Situation kann es nämlich zu einem Abschalten der Spannungsversorgung kommen. Ein elektrischer Antrieb wäre dann nicht oder nur aufgrund eines zusätzlichen apparativen Aufwands funktionsfähig.

Für ein rein mechanisches Verstellen der Fördereinrichtung des mittleren Fördersegments ist wenigstens ein Handgriff zum händischen Höhenverstellen der Fördereinrichtung des mittleren Fördersegments vorgesehen.

Für den Fall, dass der durch die Höhenverstellung freigegebene Weg in entgegengesetzte Richtungen begangen werden soll, kann die Fördereinrichtung des mittleren Fördersegments auf gegenüberliegenden Seiten, insbesondere bezogen auf die Förderbahn zum Fördern von Objekten, jeweils wenigstens einen Handgriff zum händischen Höhenverstellen der Fördereinrichtung des mittleren Fördersegments aufweisen. Dies gilt alternativ oder zusätzlich auch für den Fall, dass die Fördereinrichtung des mittleren Fördersegments von einer Seite der Fördereinrichtung händisch über einen Handgriff angehoben und von der anderen Seite der Fördereinrichtung händisch wieder abgesenkt werden soll. Besonders einfach und zuverlässig lässt sich die bedarfsweise Bereitstellung des Wegs bewirken, wenn wenigstens ein, insbesondere dem mittleren Fördersegment zugeordneter, Fuß mit einer Aufstandsfläche zum Aufstellen des Stetigförderers auf einem Untergrund vorgesehen ist. So kann sichergestellt werden, dass die vorbestimmte Höhe des durch die Höhenverstellung der Fördereinrichtung des mittleren Fördersegments erzeugten Freiraums auch erreicht wird. Alternativ oder zusätzlich kann eine Unterseite der Fördereinrichtung des mittleren Fördersegments wenigstens abschnittsweise wenigstens 160 cm, vorzugsweise wenigstens 175 cm, insbesondere wenigstens 190 cm, oberhalb der Aufstandsfläche angeordnet sein, und zwar dann, wenn die Fördereinrichtung in der oberen Stellung angeordnet ist. So wird ein ausreichender Freiraum wenigstens bereichsweise unterhalb der Fördereinrichtung bereitgestellt. Es kann aber auch vorgesehen sein, dass die Unterseite der Fördereinrichtung des mittleren Fördersegments wenigstens abschnittsweise in der oberen Stellung höchstens 240 cm, vorzugsweise höchstens 220 cm, insbesondere höchstens 200 cm, oberhalb der Aufstandsfläche angeordnet ist. Auf diese Weise wird ein übermäßiger apparativer Aufwand vermieden und sichergestellt, dass die Höhenverstellung in vielfältigen Anwendungen zuverlässig erfolgen kann.

Alternativ oder zusätzlich kann das mittlere Fördersegment in der Förderrichtung der Objekte gesehen vorne und hinten jeweils wenigstens ein Bein aufweisen, was die zuverlässige Bereitstellung des vorgesehenen Freiraums begünstigt. Dies gilt insbesondere, wenn die Länge der Beine unterhalb eines sich zwischen den Beinen erstreckenden Abschnitts der Fördereinrichtung wenigstens 160 cm, vorzugsweise wenigstens 175 cm, insbesondere wenigstens 190 cm, beträgt. So wird letztlich die Höhe des Freiraums zuverlässig definiert. Auch hier kann es aber bevorzugt sein, wenn die entsprechende Beinlänge höchstens 240 cm, vorzugsweise höchstens 220 cm, insbesondere höchstens 200 cm, beträgt, um einen unnötigen Aufwand und unnötige Maßnahmen zu vermeiden.

Um eine einfache und zuverlässige Höhenverstellung zu ermöglichen, weist die Höhenverstelleinrichtung wenigstens ein Gegengewicht zum wenigstens teilweisen Ausgleichen des Gewichts der Fördereinrichtung des mittleren Fördersegments beim Verstellen der Fördereinrichtung von der unteren Gebrauchsstellung in die obere Stellung und zurück auf. Der Bediener muss somit beispielsweise nur einen Bruchteil der Kraft für das Anheben und/oder Absenken des wenigstens einen Gewichts der Fördereinrichtung des mittleren Fördersegments aufbringen. Dabei ist es zum Zwecke eines einfachen und zuverlässigen Verstellens der Fördereinrichtung des mittleren Fördersegments besonders zweckmäßig, wenn die Massendifferenz zwischen der Fördereinrichtung und dem wenigstens einen Gegengewicht weniger als 20 kg, vorzugsweise weniger als 15 kg, insbesondere weniger als 10 kg beträgt.

Zusätzlich kann das mittlere Fördersegment wenigstens eine selbsttätige Arretiereinrichtung zum selbsttätigen Arretieren der Fördereinrichtung des mittleren Fördersegments in der unteren Gebrauchsstellung und/oder in der oberen Stellung aufweisen. Der Bediener braucht dann die Fördereinrichtung nur in die wenigstens eine obere Stellung und/oder in die wenigstens eine untere Gebrauchsstellung zu verstellen. Dort erfolgt dann die Arretierung, so dass ein versehentliches Verstellen der Fördereinrichtung des mittleren Fördersegments vermieden wird.

Damit die Höhenverstellung auch in einer Notsituation von unterschiedlichen Personen leicht bewerkstelligt werden kann, ist eine bevorzugte Höhenverstelleinrichtung so ausgebildet, dass das Anheben der Fördereinrichtung aus der unteren Gebrauchsstellung in die obere Stellung und/oder für das Absenken von der oberen Stellung in die untere Gebrauchsstellung eine Kraft von weniger als 300 N, vorzugsweise weniger als 260 N, insbesondere weniger als 220 N, erfordert.

Einer zweckmäßigen Förderung der Objekte und/oder einem Integrieren des Stetigförderers in eine bestehende Förderanlage kann es dienlich sein, wenn die Fördereinrichtung des mittleren Fördersegments entlang der Förderbahn und/oder die Förderbahn der Fördereinrichtung des mittleren Fördersegments geradlinig oder gebogen ausgebildet ist. Die gebogene Ausgestaltung der wenigstens einen Förderbahn kann dabei nach Art eines Kreisbogens ausgebildet sein, um die Objekte gleichmäßig und schonend zu fördern.

Damit die Höhenverstellung der Fördereinrichtung des Fördersegments nicht die Förderung der Objekte beeinträchtigt, ist bedarfsweise vorgesehen, dass die Fördereinrichtung des mittleren Fördersegments einen motorischen Antrieb zum Antrieb der Fördereinrichtung zum Fördern der Objekte entlang der der Fördereinrichtung des Fördersegments zugeordneten Förderbahn aufweist.

Ganz unabhängig davon ist es der Einfachheit und Zuverlässigkeit halber besonders zweckmäßig, wenn die Fördereinrichtung des mittleren Fördersegments einen Rollenförderer und/oder einen Bandförderer aufweist. Der Rollenförderer kann dabei motorisch angetrieben sein. Es kann aber auch eine schwerkraftgetriebene Förderung der Objekte durch den Rollenförderer vorgesehen sein. Zudem ist es der Einfachheit halber bevorzugt, wenn auch das vordere Fördersegment und/oder das hintere Fördersegment einen Rollenförderer und/oder einen Bandförderer aufweisen. Dies kann auch einer schonenden Förderung der Objekte zuträglich sein.

Dabei kann bedarfsweise eine höhere Funktionalität und/oder Flexibilität für den Einsatz des Stetigförderers erreicht werden, wenn das vordere Fördersegment eine Fördereinrichtung und/oder das hintere Fördersegment eine Fördereinrichtung zum Fördern der Objekte aufweist. Dies gilt umso mehr, wenn das vordere Fördersegment eine Höhenverstelleinrichtung zur Höhenverstellung der Fördereinrichtung des vorderen Fördersegments und/oder das hintere Fördersegment eine Höhenverstelleinrichtung zur Höhenverstellung der Fördereinrichtung des hinteren Fördersegments aufweist. So sind sehr unterschiedliche Förderaufgaben auf engstem Raum zu bewältigen, ohne dass auf Fluchtwege, Rettungswege und/oder Wege für die Wartung und/oder Reparatur verzichtet werden muss.

Bei einer ersten besonders bevorzugten Ausgestaltung der Objektförderhalle ist die Unterseite der Fördereinrichtung des mittleren Fördersegments in der oberen Stellung wenigstens abschnittsweise wenigstens 160 cm, vorzugsweise wenigstens 175 cm, insbesondere wenigstens 190 cm, oberhalb des Hallenbodens der Objektförderhalle unterhalb der Fördereinrichtung angeordnet, um den Freiraum zweckmäßig als Fluchtweg, Rettungsweg und/oder Weg für die Wartung und/oder Reparatur nutzen zu können. Um die Nutzbarkeit zu verbessern und den appartiven Aufwand zu begrenzen, kann es zweckmäßig sein, dass die Unterseite der Fördereinrichtung des mittleren Fördersegments in der oberen Stellung wenigstens abschnittsweise höchstens 240 cm, vorzugsweise höchstens 220 cm, insbesondere höchstens 200 cm oberhalb des Hallenbodens der Objektförderhalle unterhalb der Fördereinrichtung angeordnet ist.

Nachfolgend wird die Erfindung anhand einer lediglich Ausführungsbeispiele darstellenden Zeichnung näher erläutert. In der Zeichnung zeigt
- Fig. 1A-B: einen ersten erfindungsgemäßen Stetigförderer und einen zweiten erfindungsgemäßen Stetigförderer in einer entsprechenden, erfindungsgemäßen Objektförderhalle jeweils in einer schematischen Seitenansicht,
- Fig. 2: das mittlere Fördersegment des Stetigförderers aus der Fig. 1A in einer perspektivischen Ansicht und
- Fig. 3A-B: ein Detail des mittleren Fördersegments aus Fig. 2 in einer unteren Gebrauchsstellung und in einer oberen Stellung in einer vertikalen Schnittansicht entlang der Schnittebene III-III aus Fig. 2.

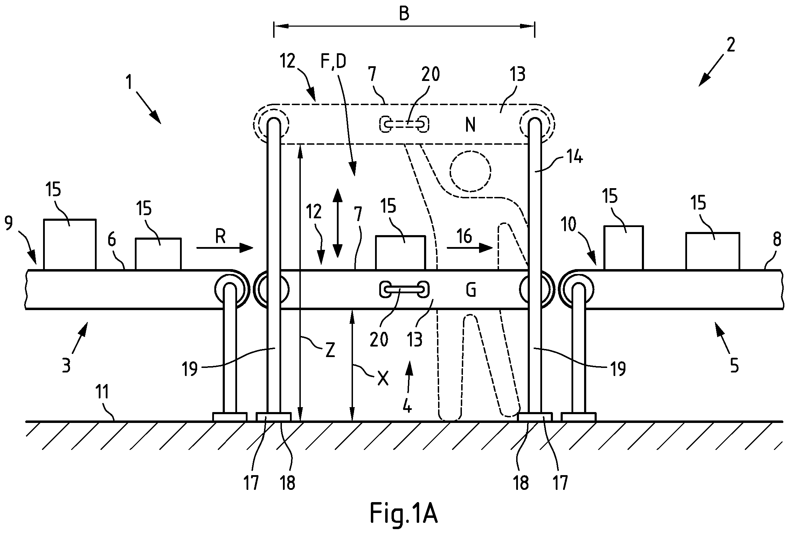

In der Fig. 1A ist ein Stetigförderer 1 in einer Objektförderhalle 2 in einer schematischen Seitenansicht dargestellt. Der Stetigförderer 1 stellt einen Bandförderer aus einem vorderen Fördersegment 3, einem mittleren Fördersegment 4 und einem hinteren Fördersegment 5 dar, wobei jedes der Födersegmente 3,4,5 ein separates, umlaufendes Förderband 6,7,8 aufweist. Das vordere Fördersegment 3 und das hintere Fördersegment 5 weisen jeweils eine Förderfläche 9,10 auf, die sich auf einer festen, vorbestimmten Höhe X oberhalb des Hallenbodens 11 der Objektförderhalle 2 befinden. Die Förderfläche 12 des mittleren Fördersegments 4 wird von einer Fördereinrichtung 13 des mittleren Fördersegments 4 gebildet. Die Fördereinrichtung 13 des mittleren Fördersegments 4 ist dabei über eine Höhenverstelleinrichtung 14 des mittleren Fördersegments 4 höhenverstellbar vorgesehen. Die Fördereinrichtung 13 kann wenigstens von einer unteren Gebrauchsstellung G in eine obere Nichtgebrauchsstellung N verstellt werden, in der die Fördereinrichtung 13 schematisch in gestrichelten Linien dargestellt ist. In der unteren Gebrauchsstellung G dient die Förderfläche 12 der Fördereinrichtung 13 des mittleren Fördersegments 4 der Förderung von Objekten 15 entlang einer Förderbahn 16, die im vorliegenden Falle in einer Ebene ausgebildet ist. Die Förderrichtung Rist hier zudem von links nach rechts vorgesehen, wie dies durch den Pfeil dargestellt ist. In der Förderrichtung R und entlang der Förderbahn 16 sind das vordere Fördersegment 3, das mittlere Fördersegment 4 und das hintere Fördersegment 5 hintereinander angeordnet, und zwar wenigstens mit der Fördereinrichtung 13 des mittleren Fördersegments 4 in der unteren Gebrauchsstellung G.

Dann sind die Förderflächen 9,10,12 der Fördersegmente wenigstens etwa in einer Ebene und wenigstens etwa fluchtend zueinander ausgerichtet. Mit anderen Worten dient die Fördereinrichtung 13 des mittleren Fördersegments 4 in der unteren Gebrauchsstellung G dem Fördern der Objekte 15 entlang der Förderbahn 16. In der oberen Nichtgebrauchsstellung N dient die Fördereinrichtung 13 des mittleren Fördersegments 4 nicht dem Fördern der Objekte 15, weshalb dann auch keine miteinander fluchtenden Förderflächen 9,10,12 der Fördersegmente 3,4,5 vorgesehen sind. Vielmehr besteht in der oberen Nichtgebrauchsstellung N ein Höhenversatz zwischen den Förderflächen 9,12;12,10 wenigstens zweier Fördersegmente 3,4,5, hier aller drei Fördersegmente 3,4,5, der einer Förderung der Objekte 15 entlang einer Förderbahn 16 entlang des Stetigförderers 1 entgegensteht. In der oberen Nichtgebrauchsstellung N dient die Fördereinrichtung 13 dem Bereitstellen eines Freiraums F darunter.

Der Freiraum F ist mithin unterhalb der in der oberen Nichtgebrauchsstellung N angeordneten Fördereinrichtung 13 des mittleren Fördersegments 4 angeordnet. Bei dem dargestellten Ausführungsbeispiel kann der Freiraum F zudem als Durchgang D genutzt werden. Der dargestellte und insoweit bevorzugte Freiraum F weist dabei eine Höhe Z von wenigstens 190 cm und eine Breite B von wenigstens 90 cm auf. Zudem erstreckt sich der Freiraum F über die gesamte Breite der Fördereinrichtung 13 senkrecht bzw. quer zur Förderbahn 16 und/oder zur Förderrichtung R.

Beim dargestellten und insoweit bevorzugten Stetigförderer 1 sind dem mittleren Fördersegment 4 bzw. der Fördereinrichtung 13 des mittleren Fördersegments 4 zugeordnet zwei Füße 17 mit jeweils einer Aufstandsfläche 18 vorgesehen. Der Stetigförderer 1 steht dabei mit den Aufstandsflächen 18 auf dem Hallenboden 11 der Objektförderhalle 2 auf. Dabei sind den Füßen 17 Beine 19 zugeordnet, die dem vorderen Ende und dem hinteren Ende des mittleren Fördersegments 13 in der Förderrichtung R zugeordnet sind. Zwischen den beiden Beinen 19 befindet sich für den Fall, dass die Fördereinrichtung 13 in der oberen Nichtgebrauchsstellung N angeordnet ist, ein Abschnitt der Fördereinrichtung 13 unterhalb dem die Beine 19 wenigstens 175 cm lang sind. Die Aufstandsflächen 18 der Füße 17 auf dem Hallenboden 11 sind von der Unterseite der Fördereinrichtung 13 des mittleren Fördersegments 4 wenigstens abschnittsweise 190 cm in vertikaler Richtung beabstandet. Allerdings ist die Unterseite der Fördereinrichtung 13 des mittleren Fördersegments 4 in der oberen Nichtgebrauchsstellung N höchstens in einer Höhe Z von 220 cm oberhalb der Aufstandsflächen 18 angeordnet.

Zum Höhenverstellen der Fördereinrichtung 13 des mittleren Fördersegments 4 ist die Fördereinrichtung 13 des mittleren Fördersegments 4 mit zwei Handgriffen 20 zum händischen Höhenverstellen der Fördereinrichtung 13 des mittleren Fördersegments 4 versehen. Der Bediener kann einen Handgriff 20 ergreifen und die Fördereinrichtung 13 rein mechanisch anheben und wieder absenken. Dabei sind die Handgriffe 20, von denen lediglich der in Blickrichtung vordere Handgriff 20 dargestellt ist, auf den gegenüberliegenden Seiten der Fördereinrichtung 13 quer zur Förderbahn 16 bzw. quer zur Förderrichtung R angeordnet, so dass der Bediener die Fördereinrichtung 13 an beiden Seiten zum Anheben oder Absenken ergreifen kann.

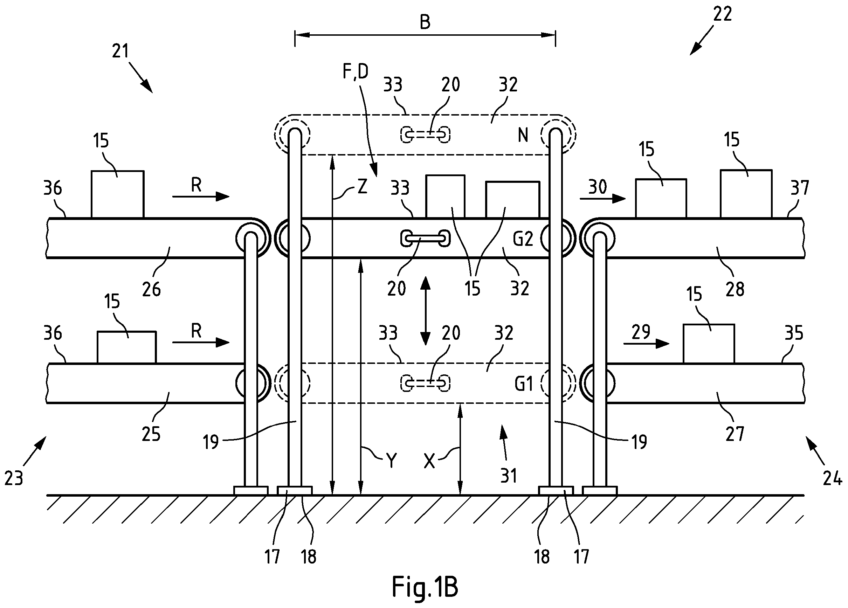

In der Fig. 1B ist ein weiterer Stetigförderer 21 in einer Objektförderhalle 22 in einer schematischen Seitenansicht dargestellt. Der Stetigförderer 21 der Fig. 1B ist dabei dem Stetigförderer 1 der Fig. 1A grundsätzlich sehr ähnlich, weshalb nachfolgend insbesondere auf den Unterschied der Stetigförderer 1,21 eingegangen wird. Gleiche Bauteile werden in den Fig. 1A-B zudem mit gleichen Bezugszeichen versehen.

Das vordere Fördersegment 23 und das hintere Fördersegment 24 haben jeweils zwei Fördereinrichtungen 25,26,27,28, die jeweils übereinander angeordnet sind. Die Fördereinrichtungen 25,26,27,28 des vorderen Fördersegments 23 und des hinteren Fördersegments 24 sind dabei unterschiedlichen Förderebenen und Förderbahnen 29,30 zugeordnet. Das mittlere Fördersegment 31 weist eine Fördereinrichtung 32 auf, die in dem dargestellten und insoweit bevorzugten Ausführungsbeispiel von zwei unteren Gebrauchsstellungen G1,G2 in eine obere Nichtgebrauchsstellung N und wieder zurück verstellt werden kann. In der unteren Gebrauchsstellung G1 befindet sich die Förderfläche 33 der Fördereinrichtung 32 des mittleren Fördersegments 31 etwa in einer Ebene und fluchtend mit den Förderflächen 34,35 der unteren Fördereinrichtungen 25,27 des vorderen Fördersegments 23 und des hinteren Fördersegments 24. In der oberen Gebrauchsstellung G2 befindet sich die Förderfläche 33 der Fördereinrichtung 32 des mittleren Fördersegments 31 etwa in einer Ebene und fluchtend mit den Förderflächen 36,37 der oberen Fördereinrichtungen 26,28 des vorderen Fördersegments 23 und des hinteren Fördersegments 24.

Der Stetigförderer 21 stellt also zwei unterschiedliche Förderbahnen 29,30 auf unterschiedlichen Höhen X,Y zu Verfügung, um Objekte 15 in der Förderrichtung R vom vorderen Fördersegment 23 über das mittlere Fördersegment 31 zum hinteren Fördersegment 24 zu fördern. Dabei kann die dargestellte und insoweit bevorzugte Fördereinrichtung 32 des mittleren Fördersegments 31 mit seiner Förderfläche 33 entweder etwa in der Ebene der oberen Förderbahn 30 oder etwa in der Ebene der unteren Förderbahn 29 angeordnet sein. In der oberen Nichtgebrauchsstellung N dient die Fördereinrichtung 32 des mittleren Fördersegments 31 nicht dem Fördern von Objekten 15 entlang einer Förderbahn 29,30, da die Förderfläche 33 der Fördereinrichtung 32 des mittleren Fördersegments 31 mit einem deutlichen Höhenversatz zu den Förderflächen 34,37 der übrigen beiden Fördersegmente 23,24 angeordnet ist. Mit der Fördereinrichtung 32 des mittleren Fördersegments 31 in der oberen Nichtgebrauchsstellung N stellt der Stetigförderer 21 jedoch einen Freiraum F unter der Fördereinrichtung 32 des mittleren Fördersegments 31 zur Verfügung der auch als Durchgang D genutzt werden kann.

Die Abmessungen und die Ausgestaltung des Freiraums F sind ähnlich den Abmessungen und der Ausgestaltung des Freiraums F des Stetigförderers 21 aus Fig. 1A. Bei dem Stetigförderer aus Fig. 1B ist die Fördereinrichtung 32 des mittleren Fördersegments 31 in der Nichtgebrauchsstellung N mit anderen Worten so vorgesehen, dass sich unterhalb der Fördereinrichtung 32 bis zum Boden, also dem Hallenboden 11, ein Freiraum F erstreckt, der wenigstens 175 cm hoch, wenigstens 90 cm breit und so tief ist, wie die Fördereinrichtung 32 breit ist. Somit kann der Freiraum F unterhalb der Fördereinrichtung 32 des mittleren Fördersegments 31 als Durchgang D genutzt werden. In den beiden darunter vorgesehenen Gebrauchsstellungen G1,G2 ist der Raum unterhalb der Fördereinrichtung 32 des mittleren Fördersegments 31 jedoch nicht hoch genug um unter der Fördereinrichtung 32 zu stehen oder zu gehen.

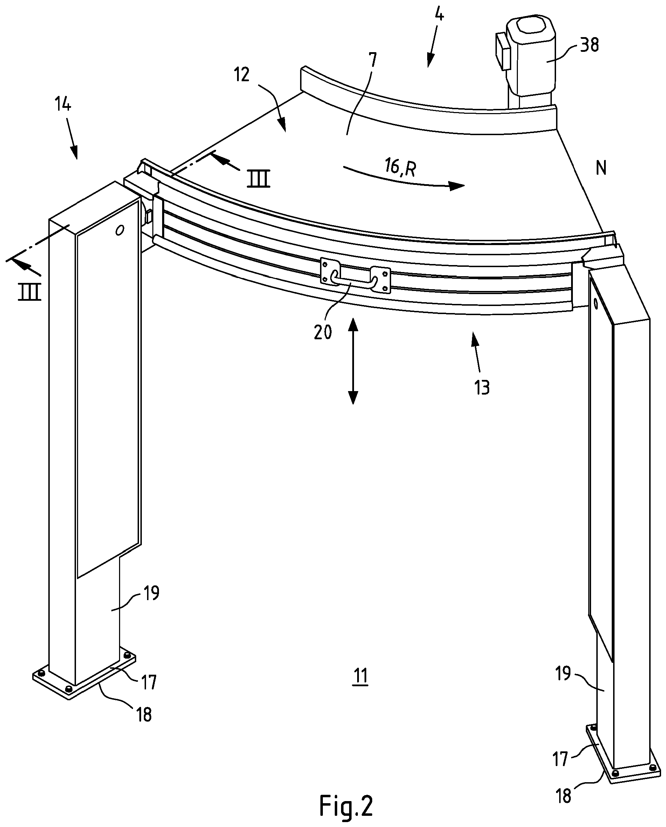

In der Fig. 2 ist das mittlere Fördersegment 4 des Stetigförderers 1 aus der Fig. 1A in einer perspektivischen Ansicht dargestellt. Das mittlere Fördersegment 4 bzw. dessen Fördereinrichtung 13 ist als Bandförderer ausgebildet und weist einen motorischen Antrieb 38 auf, der dem Antrieb des Förderbands 7 dient. Der motorische Antrieb 38 ist dabei als Teil der höhenverstellbaren Fördereinrichtung 13 ausgebildet. Die Fördereinrichtung 13 kann mit Hilfe der Höhenverstelleinrichtung 14 in der Höhe verstellt werden, und zwar von der unteren Gebrauchsstellung G und die obere Nichtgebrauchsstellung N. Dazu weist die Fördereinrichtung 13 an den gegenüberliegenden Seiten der Fördereinrichtung 13 bezogen auf die Förderbahn 16 bzw. die Förderrichtung R der zu fördernden Objekte 15 jeweils einen Handgriff 20 auf, an dem die Fördereinrichtung 13 ergriffen und angehoben bzw. abgesenkt werden kann. Die Höhenverstelleinrichtung 14 des mittleren Fördersegments 4 ist erfindungsgemäß als rein mechanische Höhenverstellung 14 ausgebildet, die mithin ohne jeglichen motorischen Antrieb auskommt. Bei dem dargestellten und insoweit bevorzugten mittleren Fördersegment 4 ist die Fördereinrichtung 13 und damit die Förderbahn 16 der Fördereinrichtung R wenigstens im Wesentlichen in Form eines Kreisbogens gekrümmt, und zwar weiter vorzugsweise wenigstens im Wesentlichen in einer horizontalen Ebene. Die Objekte 15 können so entlang einer Kurve gefördert werden. Den beiden Enden der Förderrichtung 13 in der Fördererrichtung R bzw. entlang der Förderbahn 16 zugeordnet ist jeweils ein Bein 19 vorgesehen. Jedes Bein 19 weist am unteren Ende einen Fuß 17 mit einer Aufstandsfläche 18 auf, mit der der Fuß 17 bzw. das Bein 19 auf dem Untergrund, insbesondere dem Hallenboden 11, aufsteht.

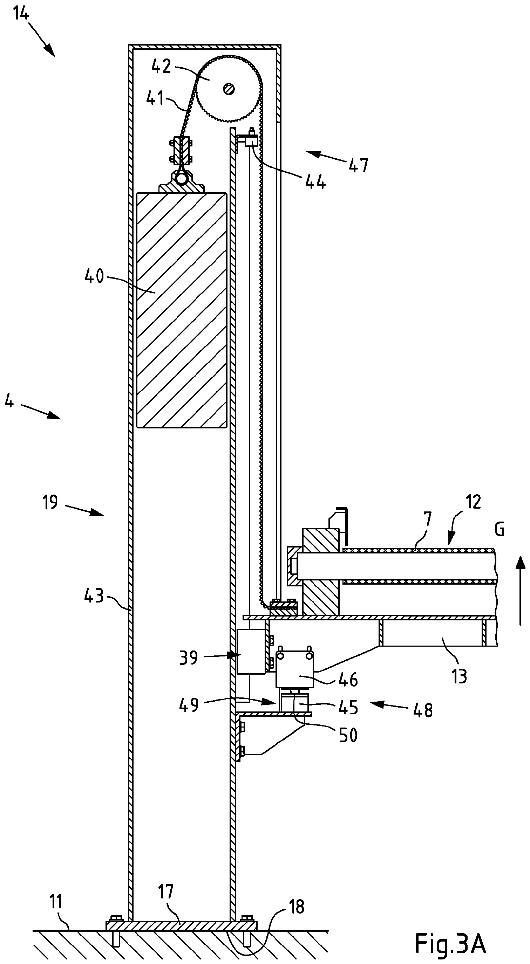

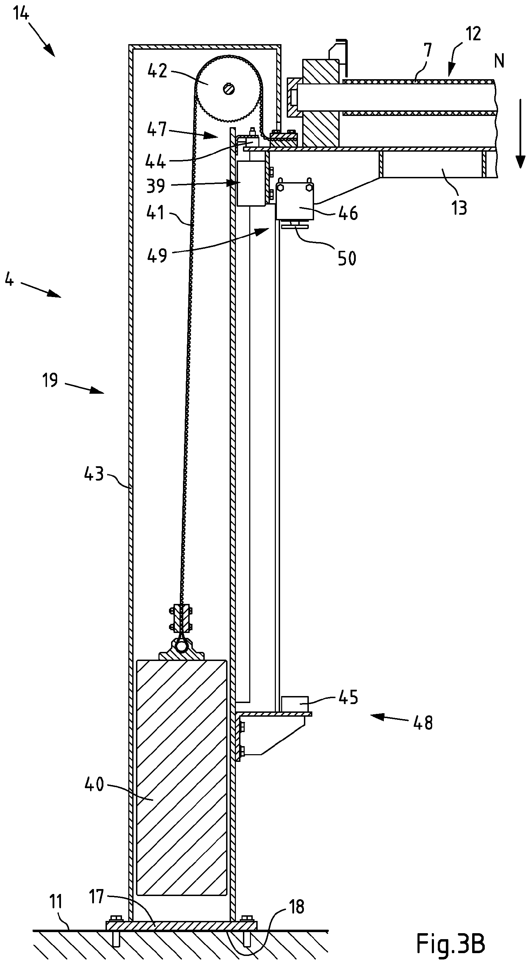

Die Höhenverstelleinrichtung 14 wird in den Schnittansichten der Fig. 3A-B im Detail dargestellt. In der Fig. 3A befindet sich die Fördereinrichtung in der unteren Gebrauchsstellung G, während sich die Fördereinrichtung 13 in der Fig. 3B in der oberen Nichtgebrauchsstellung N befindet. Die Fördereinrichtung 13 ist an jeweils einem Schienensystem 39 der Beine 19 gehalten. Zum Verstellen der Höhe der Fördereinrichtung 13 kann die Fördereinrichtung 13 entlang des Schienensystems 39 in der Höhe rauf und runter geschoben werden. Dabei wird die Fördereinrichtung 13 wenigstens im Wesentlichen aufgrund von Gegengewichten 40 gehalten, deren Gewichtskraft zumindest recht ähnlich ist mit der Gewichtskraft der Fördereinrichtung 13. Bei dem dargestellten und insoweit bevorzugten Stetigförderer 1 ist der Gewichtsunterschied zwischen den Gegengewichten 40 und der Fördereinrichtung 13 kleiner als 20 kg.

Die Gegengewichte 40 sind über Zahnriemen 41, die über korrespondierend gezahnte Umlenkrollen 42 geführt sind, mit der Fördereinrichtung 13 verbunden. Dem Verstellen der Fördereinrichtung 13 steht mithin eine gewisse Reibung an der Lagerung der Umlenkrolle 42 entgegen. Diese Reibung und der Gewichtsunterschied zwischen der Fördereinrichtung 13 und den Gegengewichten 40 sind so bemessen, dass die Kraft zum Anheben der Fördereinrichtung 13 in die obere Nichtgebrauchsstellung N und zum Absenken der Fördereinrichtung 13 in die untere Gebrauchsstellung G weniger als 260 N beträgt. Die Gegengewichte 40 sind in den Beinen 19 angeordnet und können darin rauf und runter fahren, je nach dem Verstellen der Fördereinrichtung 13. Da die Gegengewichte 40 vollständig in den Gehäusen 43 der Beine 19 aufgenommen sind, ist eine zuverlässige und definierte Höhenverstellung möglich. Ein sicherer Stand des mittleren Fördersegments 4 wird erreicht, indem die Füße 17 des mittleren Fördersegments mit dem Hallenboden 11 verschraubt sind.

Bei dem dargestellten und insoweit bevorzugten Stetigförderer 1 wird die Fördereinrichtung 13 zuverlässig in der unteren Gebrauchsstellung G und in der oberen Nichtgebrauchsstellung N gehalten. So kommt es zu keinem versehentlichen Höhenverstellen der Fördereinrichtung 13 und mithin auch nicht zu vermeidbaren Personenschäden. Bei dem dargestellten und insoweit bevorzugten Stetigförderer 1 sind die Gegengewichte 40 schwerer als die Fördereinrichtung 13 des mittleren Fördersegments 4. Daher wird die Fördereinrichtung 13 aufgrund der Schwerkraft in der oberen Nichtgebrauchsstellung N gehalten, in der die Fördereinrichtung 13 an wenigstens einem oberen Endanschlag 44 anliegt. Dabei wird die Fördereinrichtung 13 durch die Schwerkraft an dem wenigstens einen oberen Endanschlag 44 gehalten. Wird der Handgriff 20 nach einer nur teilweisen Verstellung in Richtung der oberen Nichtgebrauchsstellung N oder der unteren Gebrauchsstellung G vom Bediener losgelassen, verstellt sich die Fördereinrichtung 13 selbsttätig in die obere Nichtgebrauchsstellung N. Wegen des begrenzten Gewichtsunterschieds zwischen der Fördereinrichtung 13 und den Gegengewichten 40 erfolgt diese Verstellung jedoch recht langsam, so dass dadurch Personen nicht versehentlich verletzt werden können.

In der unteren Gebrauchsstellung G ist dagegen wenigstens ein unterer Endanschlag 45 vorgesehen, an dem die Fördereinrichtung 13 in der unteren Gebrauchsstellung G infolge einer Magnetkraft gehalten wird. Ein versehentliches Verstellen der Fördereinrichtung 13 nach oben wird so vermieden. Die Fördereinrichtung 13 weist dazu wenigstens einen Magneten 46 auf, der in der unteren Gebrauchsstellung G mit dem unteren Endanschlag 45 zusammenwirkt. Die Magnetkraft ist jedoch nicht so groß, als dass die Fördereinrichtung 13 nicht ohne Weiteres von Hand nach oben in die Nichtgebrauchsstellung N verstellt werden könnte. Das mittlere Fördersegment 4 weist mithin selbsttätige Arretiereinrichtungen 47,48 zum selbsttätigen Arretieren der Fördereinrichtung 13 des mittleren Fördersegments 4 in der unteren Gebrauchsstellung G und in der oberen Nichtgebrauchsstellung N auf.

Sobald die Fördereinrichtung 13 gegenüber der unteren Gebrauchsstellung G etwas angehoben ist, wird die Magnetkraft zwischen dem wenigstens einen unteren Endanschlag 45 und dem wenigstens einen Magneten 46 schnell geringer. Grundsätzlich könnte der Magnet 46 auch an der Höhenverstelleinrichtung 14 vorgesehen sein und mit der Fördereinrichtung 13 zusammenwirken, wenn sich die Fördereinrichtung 13 in der unteren Gebrauchsstellung G befindet.

Des Weiteren kann ein Schalter 49 vorgesehen sein, der in der unteren Gebrauchsstellung G der Fördereinrichtung 13 geschlossen und in der oberen Nichtgebrauchsstellung N der Fördereinrichtung 13 offen ist. So lässt sich eine Zwangsabschaltung des Stetigförderers 1 bzw. des mittleren Fördersegments 4 durch bloßes Anheben der Fördereinrichtung 13 erreichen. Beim dargestellten und insoweit bevorzugten Stetigförderer 1 ist der Magnet 46 mit einem Taster 50 versehen, der in der unteren Gebrauchsstellung G durch die Anlage der Fördereinrichtung 13 an dem unteren Endanschlag 45 gedrückt gehalten wird. In der oberen Nichtgebrauchsstellung N hängt der Taster 50 infolge der Schwerkraft frei nach unten und ist mithin nicht gedrückt. Der Schalter 49 ist dann offen während der Schalter 49 durch das Eindrücken des Tasters 50 geschlossen werden kann.

### Bezugszeichenliste

- 1: Stetigförderer 1
- 2: Objektförderhalle
- 3: vorderes Fördersegment
- 4: mittleres Fördersegment
- 5: hinteres Fördersegment
- 6-8: Förderband
- 9,10: Förderfläche
- 11: Hallenboden
- 12: Förderfläche
- 13: Fördereinrichtung
- 14: Höhenverstelleinrichtung
- 15: Objekt
- 16: Förderbahn
- 17: Fuß
- 18: Aufstandsfläche
- 19: Bein
- 20: Handgriff
- 21: Stetigförderer
- 22: Objektförderhalle
- 23: vorderes Fördersegment
- 24: hinteres Fördersegment
- 25-28: Fördereinrichtung
- 29,30: Förderbahn
- 31: mittleres Fördersegment
- 32: Fördereinrichtung
- 33-37: Förderfläche
- 38: motorischer Antrieb
- 39: Schienensystem
- 40: Gegengewicht
- 41: Zahnriemen
- 42: Umlenkrolle
- 43: Gehäuse
- 44: oberer Endanschlag
- 45: unterer Endanschlag
- 46: Magnet
- 47-48: Arretiereinrichtung
- 49: Schalter
- 50: Taster
- B: Breite
- D: Durchgang
- F: Freiraum
- G-G2: Gebrauchsstellung
- N: Nichtgebrauchsstellung
- R: Förderrichtung
- X: Höhe
- Y: Höhe
- Z: Höhe

## Patentansprüche

1. Stetigförderer (1,21), insbesondere Bandförderer oder Rollenförderer, zum Fördern von Objekten (15) mit einem vorderen Fördersegment (3,23), einem mittleren Fördersegment (4,31) und einem hinteren Fördersegment (5,24), wobei wenigstens das mittlere Fördersegment (4,31) eine Fördereinrichtung (13,32) zum Fördern von Objekten (15) und wenigstens eine Höhenverstelleinrichtung (14) zum Höhenverstellen wenigstens der Fördereinrichtung (13,32) von wenigstens einer unteren Gebrauchsstellung (G,G1,G2) zum Fördern von Objekten (15) in eine obere Stellung gegenüber dem vorderen Fördersegment (3,23) und dem hinteren Fördersegment (5,24) aufweist, wobei in einer Förderstellung das vordere Fördersegment (3,23), die Fördereinrichtung (13,32) des mittleren Fördersegments (4,31) und das hintere Fördersegment (5,24) in wenigstens einer Fördereinrichtung (R) hintereinander angeordnet sind, wobei unterhalb der Fördereinrichtung (13,32) des mittleren Fördersegments (4,32) in der oberen Stellung ein Freiraum (F), insbesondere ein Durchgang (D), mit einer Höhe (Z) von wenigstens 160 cm, vorzugsweise wenigstens 175 cm, insbesondere wenigstens 190 cm, einer Breite (B) von wenigstens 70 cm, vorzugsweise wenigstens 90 cm, insbesondere wenigstens 110 cm und einer Tiefe entsprechend der Breite der Fördereinrichtung (13,32) des mittleren Fördersegments (4,31) vorgesehen ist und wobei die Höhenverstelleinrichtung (14) wenigstens ein Gegengewicht (40) zum wenigstens teilweisen Ausgleichen des Gewichts der Fördereinrichtung (13,32) des mittleren Fördersegments (4,31) beim Verstellen der Fördereinrichtung (13,32) von der unteren Gebrauchsstellung (G,G1,G2) in die obere Stellung und zurück aufweist,
**dadurch gekennzeichnet, dass** die Höhenverstelleinrichtung (14) zum Höhenverstellen der Fördereinrichtung (13,32) des mittleren Fördersegments (4,31) als rein mechanische Höhenverstelleinrichtung (14) zum rein mechanischen, händischen Höhenverstellen der Fördereinrichtung (13,32) des mittleren Fördersegments (4,31) ausgebildet ist und dass die Fördereinrichtung (13,32) des mittleren Fördersegments (4,31) wenigstens einen Handgriff (20) zum händischen Höhenverstellen der Fördereinrichtung (13,32) des mittleren Fördersegments (4,31) aufweist.

2. Stetigförderer nach Anspruch 1,
**dadurch gekennzeichnet, dass** wenigstens eine Förderfläche (9,34,36) des vorderen Fördersegments (3,23), wenigstens eine Förderfläche (7,33) der Fördereinrichtung (13,32) des mittleren Fördersegments (4,31) in der unteren Gebrauchsstellung (G,G1,G2) und wenigstens eine Förderfläche (8,35,37) des hinteren Fördersegments (5,24) eine wenigstens im Wesentlich stetige Förderbahn (16,29,30) zum Fördern von Objekten (15) vom vorderen Fördersegment (3,23) über das mittlere Fördersegment (4,31) zum hinteren Fördersegment (5,24) bilden.

3. Stetigförderer nach Anspruch 1 oder 2,
**dadurch gekennzeichnet, dass** die obere Stellung der Fördereinrichtung (13,32) des mittleren Fördersegments (4,31) eine nicht dem Fördern von Objekten (15) dienende Nichtgebrauchsstellung (N) ist und dass, vorzugsweise, die wenigstens eine Förderfläche (7,33) der Fördereinrichtung (13,32) des mittleren Fördersegments (4,31) in der oberen Stellung zusammen mit den Förderflächen (6,8,34-37) des vorderen Fördersegments (3,23) und des hinteren Fördersegments (5,24) keine wenigstens im Wesentlichen stetige Förderbahn (16,29,30) zum Fördern von Objekten (15) vom vorderen Fördersegment (3,23), über das mittlere Fördersegment (4,31) zum hinteren Fördersegment (5,24) bilden.

4. Stetigförderer nach einem der Ansprüche 1 bis 3,
**dadurch gekennzeichnet, dass** die Fördereinrichtung (13,32) des mittleren Fördersegments (4,31) auf gegenüberliegenden Seiten, insbesondere bezogen auf die Förderbahn (16,29,30) zum Fördern von Objekten 15, jeweils wenigstens einen Handgriff (20) zum händischen Höhenverstellen der Fördereinrichtung (13,32) des mittleren Fördersegments (4,31) aufweist.

5. Stetigförderer nach einem der Ansprüche 1 bis 4,
**dadurch gekennzeichnet, dass** wenigstens ein, insbesondere dem mittleren Fördersegment (4,31) zugeordneter, Fuß (17) mit einer Aufstandsfläche (18) zum Aufstellen des Stetigförderers (1) auf einem Untergrund vorgesehen ist und/oder dass eine Unterseite der Fördereinrichtung (13,32) des mittleren Fördersegments (4,31) wenigstens abschnittsweise in der oberen Stellung wenigstens 160 cm, vorzugsweise wenigstens 175 cm, insbesondere wenigstens 190 cm oberhalb der Aufstandsfläche angeordnet ist und/oder dass die Unterseite der Fördereinrichtung (13,32) des mittleren Fördersegments (4,31) wenigstens abschnittsweise in der oberen Stellung höchstens 240 cm, vorzugsweise höchstens 220 cm, insbesondere höchstens 200 cm, oberhalb der Aufstandsfläche (18) angeordnet ist.

6. Stetigförderer nach einem der Ansprüche 1 bis 5,
**dadurch gekennzeichnet, dass** das mittlere Fördersegment (4,31) in der Förderrichtung (R) der Objekte (15) gesehen vorne und hinten jeweils wenigstens ein Bein (19) aufweist und dass, vorzugsweise die Länge der Beine (19) unterhalb eines sich zwischen den Beinen (19) erstreckenden Abschnitts der Fördereinrichtung (13,32) wenigstens 160 cm, vorzugsweise wenigstens 175 cm, insbesondere wenigstens 190 cm lang sind.

7. Stetigförderer nach einem der Ansprüche 1 bis 6,
**dadurch gekennzeichnet, dass** die Massendifferenz zwischen der Fördereinrichtung (13,32) und dem wenigstens einen Gegengewicht (40) weniger als 20 kg, vorzugsweise weniger als 15 kg, insbesondere weniger als 10 kg beträgt.

8. Stetigförderer nach einem der Ansprüche 1 bis 7,
**dadurch gekennzeichnet, dass** das mittlere Fördersegment (4,31) wenigstens eine selbsttätige Arretiereinrichtung (47,48) zum selbsttätigen Arretieren der Fördereinrichtung (13,32) des mittleren Fördersegments (4,31) in der unteren Gebrauchsstellung (G,G1,G2) und/oder in der oberen Stellung aufweist.

9. Stetigförderer nach einem der Ansprüche 1 bis 8,
**dadurch gekennzeichnet, dass** die Höhenverstelleinrichtung (14) derart ausgebildet ist, dass das Anheben der Fördereinrichtung (13,32) aus der unteren Gebrauchsstellung (G,G1,G2) in die obere Stellung und/oder für das Absenken von der oberen Stellung in die untere Gebrauchsstellung (G,G1,G2) eine Kraft von weniger als 300 N, vorzugsweise weniger als 260 N, insbesondere weniger als 220 N, erfordert.

10. Stetigförderer nach einem der Ansprüche 1 bis 9,
**dadurch gekennzeichnet, dass** die Fördereinrichtung (13,32) des mittleren Fördersegments (4,31) entlang der Förderbahn (16,29,30) und/oder der Förderrichtung (R) der Fördereinrichtung (13,32) des mittleren Fördersegments (4,31) geradlinig oder gebogen ausgebildet ist.

11. Stetigförderer nach einem der Ansprüche 1 bis 10,
**dadurch gekennzeichnet, dass** die Fördereinrichtung (13,32) des mittleren Fördersegments (4,31) einen motorischen Antrieb (38) zum Antrieb der Fördereinrichtung (13,32) zum Fördern der Objekte (15) aufweist.

12. Stetigförderer nach einem der Ansprüche 1 bis 11,
**dadurch gekennzeichnet, dass** die Fördereinrichtung (13,32) des mittleren Fördersegments (4,31) einen Rollenförderer und/oder einen Bandförderer aufweist.

13. Stetigförderer nach einem der Ansprüche 1 bis 12,
**dadurch gekennzeichnet, dass** das vordere Fördersegment (23), bedarfsweise eine Fördereinrichtung (25,26) des vorderen Fördersegments (23), und/oder das hintere Fördersegment (24), bedarfsweise eine Fördereinrichtung (27,28) des hinteren Fördersegments (24), einen Rollenförderer und/oder einen Bandförderer aufweist und/oder dass das vordere Fördersegment eine Höhenverstelleinrichtung zur Höhenverstellung der Fördereinrichtung des vorderen Fördersegments und/oder das hintere Fördersegment eine Höhenverstelleinrichtung zur Höhenverstellung der Fördereinrichtung des hinteren Fördersegments aufweist.

14. Objektförderhalle (2) mit wenigstens einem Stetigförderer (1,21) nach einem der Ansprüche 1 bis 13, wobei der Freiraum (F) einen Durchgang (D), insbesondere quer zur Förderbahn (16,29,30) und/oder Förderrichtung (R), bildet.

15. Objektförderhalle nach Anspruch 14,
**dadurch gekennzeichnet, dass** die Unterseite der Fördereinrichtung (13,32) des mittleren Fördersegments (4,31) in der oberen Stellung wenigstens abschnittsweise wenigstens 160 cm, vorzugsweise wenigstens 175 cm, insbesondere wenigstens 190 cm, oberhalb des Hallenbodens (11) der Objektförderhalle (2) unterhalb der Fördereinrichtung (13,32) angeordnet ist und/oder dass die Unterseite der Fördereinrichtung (13,32) des mittleren Fördersegments (4,31) in der oberen Stellung wenigstens abschnittsweise höchstens 240 cm, vorzugsweise höchstens 220 cm, insbesondere höchstens 200 cm oberhalb des Hallenbodens (11) der Objektförderhalle (2) unterhalb der Fördereinrichtung (13,32) angeordnet ist.

## Claims

1. Continuous conveyor (1, 21), in particular belt conveyor or roller conveyor, for conveying objects (15), having a front conveyor segment (3, 23), a central conveyor segment (4, 31) and a rear conveyor segment (5, 24), wherein at least the central conveyor segment (4, 31) having a conveying device (13,32) for conveying objects (15) and at least one height adjustment device (14) for height adjustment of at least the conveying device (13, 32) from at least one lower position of use (G, G1, G2) for conveying objects (15) into an upper position relative to the front conveyor segment (3, 23) and the rear conveyor segment (5, 24), wherein in a conveying position the front conveyor segment (3,23), the conveying device (13, 32) of the central conveyor segment (4, 31) and the rear conveyor segment (5, 24) being arranged one behind the other in at least one conveying device (R), wherein below the conveying device (13, 32) of the central conveyor segment (4, 32) in the upper position a free space (F), in particular a passage (D), with a height (Z) of at least 160 cm, preferably at least 175 cm, in particular at least 190 cm, a width (B) of at least 70 cm, preferably at least 90 cm, in particular at least 110 cm, and a depth corresponding to the width of the conveying device (13, 32) of the central conveyor segment (4, 31) is provided, and wherein the height adjustment device (14) has at least one counterweight (40) for at least partially compensating for the weight of the conveying device (13, 32) of the central conveyor segment (4, 31) when the conveying device (13, 32) is moved from the lower position of use (G, G1, G2) into the upper position and back, **characterized in that** the height adjustment device (14) for height adjustment of the conveying device (13,32) of the central conveyor segment (4, 31) is designed as a purely mechanical height adjustment device (14) for purely mechanical, manual height adjustment of the conveying device (13, 32) of the central conveyor segment (4, 31), and **in that** the conveying device (13, 32) of the central conveyor segment (4, 31) has at least one handle (20) for manual height adjustment of the conveying device (13, 32) of the central conveyor segment (4, 31).

2. Continuous conveyor according to claim 1, **characterized in that** at least one conveying surface (9,34,36) of the front conveyor segment (3,23), at least one conveying surface (7,33) of the conveying device (13,32) of the central conveyor segment (4,31) in the lower position of use (G,G1,G2) and at least one conveying surface (8, 35, 37) of the rear conveyor segment (5, 24) form an at least substantially continuous conveying path (16, 29, 30) for conveying objects (15) from the front conveyor segment (3, 23) via the central conveyor segment (4, 31) to the rear conveyor segment (5, 24).

3. Continuous conveyor according to claim 1 or 2, **characterized in that** the upper position of the conveying device (13, 32) of the central conveyor segment (4, 31) is a non-use position (N) not serving for conveying objects (15) and that, preferably, the at least one conveying surface (7, 33) of the conveying device (13, 32) of the central conveyor segment (4,31) in the upper position together with the conveying surfaces (6, 8, 34-37) of the front conveyor segment (3, 23) and of the rear conveyor segment (5, 24) do not form an at least substantially continuous conveying path (16, 29, 30) for conveying objects (15) from the front conveyor segment (3, 23) via the central conveyor segment (4, 31) to the rear conveyor segment (5, 24).

4. Continuous conveyor according to any one of claims 1 to 3, **characterized in that** the conveying device (13, 32) of the central conveyor segment (4, 31) has, on opposite sides, in particular with respect to the conveying path (16, 29, 30) for conveying objects 15, in each case at least one handle (20) for manual height adjustment of the conveying device (13, 32) of the central conveyor segment (4, 31).

5. Continuous conveyor according to any one of the claims 1 to 4, **characterized in that** at least one foot (17), in particular assigned to the central conveyor segment (4, 31), is provided with a contact surface (18) for setting up the continuous conveyor (1) on a base and/or **in that** an underside of the conveying device (13, 32) of the central conveyor segment (4, 31) is arranged at least in sections in the upper position at least 160 cm, preferably at least 175 cm, in particular at least 190 cm, above the contact surface and/or **in that** the underside of the conveying device (13, 32) of the central conveyor segment (4, 31) is arranged, at least in sections, in the upper position at most 240 cm, preferably at most 220 cm, in particular at most 200 cm, above the contact surface (18).

6. Continuous conveyor according to any one of claims 1 to 5, **characterized in that** the central conveyor segment (4, 31) has at least one leg (19) at the front and at the rear in each case, as seen in the conveying direction (R) of the objects (15), and **in that**, preferably, the length of the legs (19) below a section of the conveying device (13, 32) extending between the legs (19) is at least 160 cm, preferably at least 175 cm, in particular at least 190 cm long.

7. Continuous conveyor according to any one of claims 1 to 6, **characterized in that** the mass difference between the conveying device (13, 32) and the at least one counterweight (40) is less than 20 kg, preferably less than 15 kg, in particular less than 10 kg.

8. Continuous conveyor according to any one of claims 1 to 7, **characterized in that** the central conveyor segment (4, 31) has at least one automatic locking device (47, 48) for automatically locking the conveying device (13, 32) of the central conveyor segment (4, 31) in the lower position of use (G, G1, G2) and/or in the upper position.

9. Continuous conveyor according to any one of the claims 1 to 8, **characterized in that** the height adjustment device (14) is designed in such a way that lifting the conveying device (13, 32) from the lower position of use (G, G1, G2) into the upper position and/or lowering it from the upper position into the lower position of use (G, G1, G2) requires a force of less than 300 N, preferably less than 260 N, in particular less than 220 N.

10. Continuous conveyor according to any one of claims 1 to 9, **characterized in that** the conveying device (13, 32) of the central conveyor segment (4, 31) is designed to be straight or curved along the conveying path (16, 29, 30) and/or the conveying direction (R) of the conveying device (13, 32) of the central conveyor segment (4, 31).

11. Continuous conveyor according to any one of claims 1 to 10,
**characterized in that** the conveying device (13, 32) of the central conveyor segment (4, 31) comprises a motor drive (38) for driving the conveying device (13, 32) for conveying the objects (15).

12. Continuous conveyor according to any one of claims 1 to 11,
**characterized in that** the conveying device (13, 32) of the central conveyor segment (4, 31) comprises a roller conveyor and/or a belt conveyor.

13. Continuous conveyor according to any one of the claims 1 to 12, **characterized in that** the front conveyor segment (23), if required, a conveying device (25, 26) of the front conveyor segment (23), and/or the rear conveyor segment (24), if required, a conveying device (27, 28) of the rear conveyor segment (24), has a roller conveyor and/or a belt conveyor and/or **in that** the front conveyor segment has a height adjustment device for height adjustment of the conveying device of the front conveyor segment and/or the rear conveyor segment has a height adjustment device for height adjustment of the conveying device of the rear conveyor segment.

14. Object conveyor hall (2) with at least one continuous conveyor (1, 21) according to any one of claims 1 to 13, wherein the free space (F) forms a passage (D), in particular transverse to the conveyor path (16, 29, 30) and/or conveying direction (R).

15. Object conveyor hall according to claim 14, **characterized in that** the underside of the conveying device (13, 32) of the central conveyor segment (4, 31) in the upper position is arranged at least in sections at least 160 cm, preferably at least 175 cm, in particular at least 190 cm, above the hall floor (11) of the object conveyor hall (2) below the conveying device (13,32) and/or **in that** the underside of the conveying device (13, 32) of the central conveyor segment (4, 31) is arranged in the upper position at least in sections at most 240 cm, preferably at most 220 cm, in particular at most 200 cm, above the hall floor (11) of the object conveying hall (2) below the conveying device (13, 32).

## Revendications

1. Transporteur continu (1,21), notamment un transporteur à bande ou un transporteur à rouleaux, pour transporter des objets (15) avec un segment de transport avant (3, 23), un segment de transport central (4, 31) et un segment de transport arrière (5, 24), ledit au moins un segment de transport central (4, 31) comprenant un dispositif de transport (13, 32) pour transporter des objets (15) et au moins un dispositif de réglage en hauteur (14) pour régler en hauteur au moins ledit dispositif de transport (13, 32) depuis au moins une position d'utilisation inférieure (G, G1, G2) pour transporter des objets (15) à une position supérieure par rapport au segment de transport avant (3, 23) et au segment de transport arrière (5, 24), où, dans une position de transport, le segment de transport avant (3, 23), le dispositif de transport (13, 32) du segment de transport central (4, 31) et le segment de transport arrière (5, 24) sont agencés l'un derrière l'autre dans au moins un dispositif de transport (R), un espace libre (F), notamment un passage (D), d'une hauteur (Z) d'au moins 160 cm, de préférence d'au moins 175 cm, notamment d'au moins 190 cm, d'une largeur (B) d'au moins 70 cm, de préférence d'au moins 90 cm notamment d'au moins 110 cm, et d'une profondeur correspondant à la largeur du dispositif de transport (13, 32) du segment de transport central (4, 31), étant prévu en dessous du dispositif de transport (13, 32) du segment de transport central (4, 31) dans la position supérieure, et le dispositif de réglage en hauteur (14) présentant au moins un contrepoids (40) pour compenser au moins partiellement le poids du dispositif de transport (13, 32) du segment de transport central (4, 31) lors du déplacement du dispositif de transport (13, 32) de la position d'utilisation inférieure (G, G1, G2) à la position supérieure et inversement, **caractérisé, en ce que** le dispositif de réglage en hauteur (14) pour le réglage en hauteur du dispositif de transport (13, 32) du segment de transport central (4, 31) est conçu comme un dispositif de réglage en hauteur (14) purement mécanique pour le réglage en hauteur purement mécanique et manuel du dispositif de transport (13, 32) du segment de transport central (4, 31) et **en ce que** le dispositif de transport (13, 32) du segment de transport central (4, 31) présente au moins une poignée (20) pour le réglage en hauteur manuel du dispositif de transport (13, 32) du segment de transport central (4, 31).

2. Transporteur continu selon la revendication 1, **caractérisé en ce qu'**au moins une surface de transport (9, 34, 36) du segment de transport avant (3, 23), au moins une surface de transport (7, 33) du dispositif de transport (13, 32) du segment de transport central (4, 31) dans la position d'utilisation inférieure (G, G1, G2) et au moins une surface de transport (8, 35, 37) du segment de transport arrière (5, 24) forme un trajet de transport (16, 29, 30) au moins sensiblement continu pour transporter des objets (15) du segment de transport avant (3, 23) au segment de transport arrière (5, 24) en passant par le segment de transport central (4, 31).

3. Transporteur continu selon la revendication 1 ou 2, **caractérisé en ce que** la position supérieure du dispositif de transport (13, 32) du segment de transport central (4, 31) est une position de non-utilisation (N) ne servant pas au transport d'objets (15) et **en ce que**, de préférence, ladite au moins une surface de transport (7, 33) du dispositif de transport (13, 32) du segment de transport central (4, 31), ne forme pas, dans la position supérieure, avec les surfaces de transport (6, 8, 34-37) du segment de transport avant (3, 23) et du segment de transport arrière (5, 24), un trajet de transport (16, 29, 30) au moins sensiblement continu pour transporter des objets (15) du segment de transport avant (3, 23) au segment de transport arrière (5, 24) en passant par le segment de transport central (4, 31).

4. Transporteur continu selon l'une des revendications 1 à 3, **caractérisé en ce que** le dispositif de transport (13, 32) du segment de transport central (4, 31) présente, sur des côtés opposés, notamment par rapport au trajet de transport (16, 29, 30) pour le transport d'objets 15, respectivement au moins une poignée (20) pour le réglage en hauteur manuel du dispositif de transport (13, 32) du segment de transport central (4, 31).

5. Transporteur continu selon l'une des revendications 1 à 4, **caractérisé en ce que** l'on prévoit au moins un pied (17), notamment associé au segment de transport central (4, 31), doté d'une surface d'appui (18) pour poser le transporteur continu (1) sur un sol et/ou **en ce que** le côté inférieur du dispositif de transport (13, 32) du segment de transport central (4, 31) est agencé, au moins par sections, dans la position supérieure, au moins à 160 cm, de préférence à au moins 175 cm, notamment à au moins 190 cm, au-dessus de la surface d'appui et/ou **en ce que** le côté inférieur du dispositif de transport (13, 32) du segment de transport central (4, 31) est agencé au moins par sections, dans la position supérieure, au maximum à 240 cm, de préférence au maximum à 220 cm, notamment au maximum à 200 cm, au-dessus de la surface d'appui (18).

6. Transporteur continu selon l'une des revendications 1 à 5, **caractérisé en ce que** le segment de transport central (4, 31), vu dans la direction de transport (R) des objets (15), présente à l'avant et à l'arrière respectivement au moins une jambe (19) et **en ce que**, de préférence, la longueur des jambes (19) sous une section du dispositif de transport (13, 32) s'étendant entre les jambes (19) est d'au moins 160 cm, de préférence d'au moins 175 cm, notamment d'au moins 190 cm.

7. Transporteur continu selon l'une des revendications 1 à 6, **caractérisé en ce que** la différence de masse entre le dispositif de transport (13, 32) et ledit au moins un contrepoids (40) est inférieure à 20 kg, de préférence inférieure à 15 kg, notamment inférieure à 10 kg.

8. Transporteur continu selon l'une des revendications 1 à 7, **caractérisé en ce que** le segment de transport central (4, 31) comporte au moins un dispositif de blocage automatique (47, 48) pour bloquer automatiquement le dispositif de transport (13, 32) du segment de transport central (4, 31) dans la position d'utilisation inférieure (G, G1, G2) et/ou dans la position supérieure.

9. Transporteur continu selon l'une des revendications 1 à 8, **caractérisé en ce que** le dispositif de réglage en hauteur (14) est conçu de telle sorte que le levage du dispositif de transport (13, 32) de la position d'utilisation inférieure (G, G1, G2) à la position supérieure et/ou son abaissement de la position supérieure à la position d'utilisation inférieure (G, G1, G2) nécessite une force inférieure à 300 N, de préférence inférieure à 260 N, notamment inférieure à 220 N.

10. Transporteur continu selon l'une des revendications 1 à 9, **caractérisé en ce que** le dispositif de transport (13, 32) du segment de transport central (4, 31) est conçu rectiligne ou courbé le long du trajet de transport (16, 29, 30) et/ou de la direction de transport (R) du dispositif de transport (13, 32) du segment de transport central (4, 31).

11. Transporteur continu selon l'une des revendications 1 à 10, **caractérisé en ce que** le dispositif de transport (13, 32) du segment de transport central (4, 31) présente un entraînement motorisé (38) pour entraîner le dispositif de transport (13, 32) afin de transporter les objets (15).

12. Transporteur continu selon l'une des revendications 1 à 11, **caractérisé en ce que** le dispositif de transport (13, 32) du segment de transport central (4, 31) comporte un transporteur à rouleaux et/ou un transporteur à bande.

13. Transporteur continu selon l'une des revendications 1 à 12, **caractérisé en ce que** le segment de transport avant (23), si nécessaire un dispositif de transport (25, 26) du segment de transport avant (23), et/ou le segment de transport arrière (24), si nécessaire un dispositif de transport (27, 28) du segment de transport arrière (24), présente un transporteur à rouleaux et/ou un transporteur à bande et/ou **en ce que** le segment de transport avant présente un dispositif de réglage en hauteur pour le réglage en hauteur du dispositif de transport du segment de transport avant et/ou le segment de transport arrière présente un dispositif de réglage en hauteur pour le réglage en hauteur du dispositif de transport du segment de transport arrière.

14. Hall pour transport d'objets (2) comprenant au moins un transporteur continu (1, 21) selon l'une des revendications 1 à 13, dans lequel l'espace libre (F) forme un passage (D), notamment transversal par rapport au trajet de transport (16, 29, 30) et/ou à la direction de transport (R).

15. Hall pour transport d'objets selon la revendication 14, **caractérisé en ce que** le côté inférieur du dispositif de transport (13, 32) du segment de transport central (4, 31) est agencé, dans la position supérieure, au moins par sections à au moins 160 cm, de préférence à au moins 175 cm, notamment à au moins 190 cm, au-dessus du sol du hall (11) du hall pour transport d'objets (2) en dessous du dispositif de transport (13, 32), et/ou **en ce que** le côté inférieur du dispositif de transport (13, 32) du segment de transport central (4, 31) est agencé, dans la position supérieure, au moins par sections, au maximum à 240 cm, de préférence au maximum à 220 cm, notamment au maximum à 200 cm au-dessus du sol du hall (11) du hall pour transport d'objets (2) en dessous du dispositif de transport (13, 32).
